# EUROPEAN PATENT APPLICATION

(11) **EP 1 312 910 A1**
(43) Date of publication of application: **21.05.2003**
(21) Application number: 01204378.2
(22) Date of filing: 15.11.2001
(51) Int. Cl.: G01N 11/16, G01N 11/14, G01N 13/00

(54) **Method and device for imaging the dynamic behaviour of microstructures under the influence of deformation**

(71) Applicant: Wageningen Centre for Food Sciences, 6700 AN Wageningen (NL)
(72) Inventor: Paques, Marcel, 3914 DM Doorn (NL); Imhof, Arnout, 3526 BS Utrecht (NL); van Blaaderen, Alfons, 3581 TG Utrecht (NL); Nicolas, Yves, 6708 KP Wageningen (NL)
(74) Representative: van Westenbrugge, André

(57) **Abstract**

The present invention is concerned with a method and device for imaging the dynamic behaviour of microstructures under the influence of deformation. One aspect of the invention relates to a method for analysing the behaviour of the microstructure of a material under the influence of deformation, which method comprises:
a) introducing a sample of the material to be analysed between, and in contact with, 2 elements;
b) applying deformation to the sample by counter-rotating the 2 elements around the same axis, or by counter-oscillating the 2 elements along the same linear path, whilst controlling the rotational speed or the oscillation amplitude so as to maintain a zero velocity plane within the sample;
c) matching the image plane of a non-invasive microstructure imaging device with the zero velocity plane in the sample, while applying the deformation; and
d) obtaining an image of the microstructure of the sample fror the imaging device, showing the effect of the deformation on a part of the sample which coincides with the zero velocity plane in said sample.

## Description

### TECHNICAL FIELD OF THE INVENTION

The present invention is concerned with a method and device for imaging the dynamic behaviour of microstructures under the influence of deformation. More particularly, one aspect of the invention relates to a method for analysing the behaviour of the microstructure of a material under the influence of deformation, which method comprises:
a) introducing a sample of the material to be analysed between, and in contact with, 2 elements;
b) applying deformation to the sample by counter-rotating the 2 elements around the same axis, or by counter-oscillating the 2 elements along the same linear path, whilst controlling the rotational speed or the oscillation amplitude so as to maintain a zero velocity plane within the sample;
c) obtaining an image of the microstructure of the sample from the imaging device, showing the effect of the deformation on a part of the sample which coincides with the zero velocity plane in said sample.

Another aspect of the invention relates to a device for analysing the behaviour of the microstructure of a material under the influence of rotational deformation. Yet another aspect relates to a similar device for analysing the behaviour under the influence of linear deformation.

### BACKGROUND OF THE INVENTION

The method for imaging the dynamic behaviour of microstructures as described above is known from de Haas et al., "A counter-rotating Couette apparatus to study deformation of a sub-millimeter sized particle in shear flow", Rev. Sci. Instrum. 69(3), (1998), pp. 1391-1397. In this article it is described how deformation experiments may be carried out in a Couette apparatus which comprises an inner and an outer cylinder which can be counter-rotated around a z-axis. Between the 2 cylinders a narrow gap is provided which can hold a sample which can be subjected to deformation by counter-rotating the 2 cylinders. A light microscope is provided which enables a user to view the sample, while it is being subjected to deformation. The observation plane of the microscope is perpendicular to the aforementioned z-axis as well as to the so called zero velocity plane. The zero velocity plan is the area within the sample where the shear forces exerted by each rotating cylinder are in exact balance. As a result micro-particles positioned within said zero velocity plane will not experience a displacement force, but only a deformation force. Ideally such micro-particles will remain within the zero velocity plane during the measurement, making it possible to study their deformation behaviour.

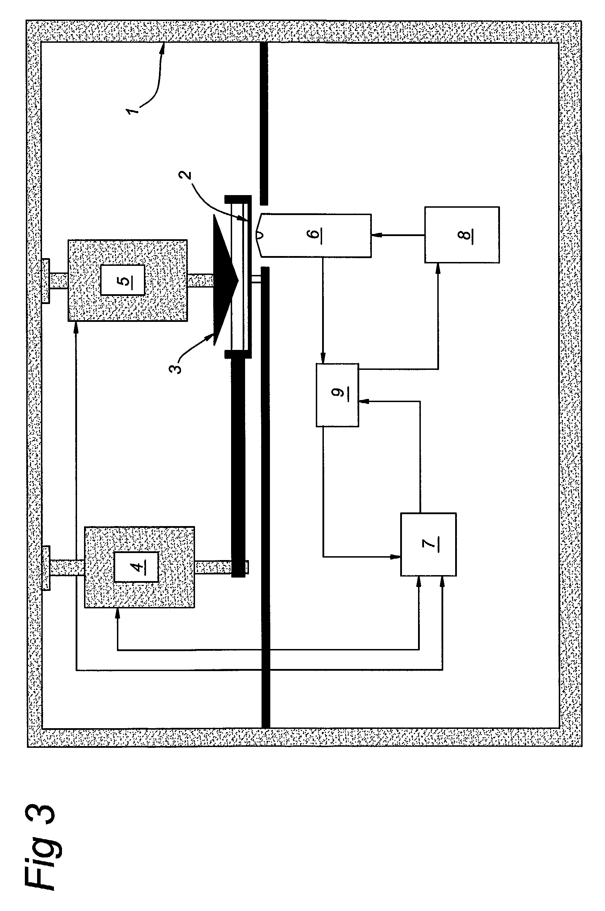

De Haas et al. observe that the design parameters for their Couette apparatus have to be extremely strict in order to be able to sufficiently fixate the zero velocity plane. Also it is noted that the height of the cylinders had to be sufficient to prevent significant distortion of the flow field, but that in practice their heights are limited by the working distance of the microscope objective. As can be seen from fig. 3. of the de Haas article, the zero velocity plane observed within the Couette apparatus has a curved nature, meaning that the zero velocity plane only partially coincides with the optical plane of the nicroscope (the area of coincidence representing a curved line in the image plane). . As a result, there is always a risk that the microscopic image will be distorted by particles moving in front of the particle that is being observed within the zero velocity plane.

Another drawback of the method described by the Haas et al. resides in the fact that the plane of observation only includes a cross-section of the zero velocity plane. Consequently only (a minor ) part of the image provides information about the behaviour within the zero velocity plane. Thus it may take several measurements before microstructural objects that meet certain pre-selected parameters can actually be observed within the zero velocity plane.

Another method for imaging the dynamic behaviour of microstructures is described by Grizutti et al., Rheol. Acta (1997) 36, 406-415. This method utilises a home-made device which comprises a light microscope and two rotating transparent parallel plates. Dispersion samples may be inserted between the two plates which can be counter rotated so that sheared droplets of the dispersed phase can be kept fixed with respect to the microscope. Thus, the focal plane of the light microscope can be matched to the zero velocity plane within the sample whilst it is subjected to conditions of shear. An important disadvantage of this method is that it can only be used to study translucent samples as light has to pass through the sample in order to obtain an microscopic image of the sample.

Both the method described by de Haas et al. and the method according to Grizutti et al. suffer from the drawback that they employ an imaging technique (i.e. light microscopy) which produces images that not only display objects that are within the focal plane, but also items that are outside the focal plane. In particular items that are positioned between objects in the focal plane and the lens of the microscope, may cause serious interference. If microstructures are studied which contain a large number of microstructural objects, the interference of objects moving between the focal plane and the microscope's lens may effectively render it impossible to obtain useful results via this technique. Indeed these techniques cannot be used on samples which contain a large number of (high contrast) objects, such as particles, bubbles or droplets.

Yet another drawback of the above prior art methods is related to the fact that in such methods dispersed droplets are deformed, under the action of shear, into elongated objects, but that only a projection of the deformed shape is observable through the light microscope. Thus no accurate information about the actual size of such droplets can be extracted from the image. It will be evident that such geometric information is extremely useful when studying the dynamic behaviour of e.g. dispersions under conditions of shear or deformation.

In view of the above considerations there is a need for a method that enables the imaging of the dynamic behaviour of microstructures under the influence of deformation without the aforementioned drawbacks.

### SUMMARY OF THE INVENTION

The inventors have developed a new method that makes it possible to study the dynamic deformation behaviour of microstructures within a wide variety of materials. The present method is highly flexible and can easily be automated so as to ensure that stable measurements can be made across a wide range of deformation conditions.

The inventors have recognised that superior results can be obtained with the present method by arranging the equipment in such a way that the imaging plane largely overlaps with the zero velocity plane. By employing 2 counter-rotating elements which rotate around the same axis and which, between them, define a planar gap that intersects with the rotational axis, a zero velocity plane is created which extends as a largely planar surface, perpendicular to the rotational axis. A truly planar velocity plane is obtained if the 2 elements have the same shape, e.g. if both are flat disks or in case both elements are cones with the same cone angle, provided the elements are symmetrically arranged around the gap. However, also combinations of e.g. a cone and a disk can be used to obtain a zero velocity plane in the form of a largely planar surface, particularly by manipulating the respective speeds of the cone and the disk.

Instead of 2 elements that counter-rotate the present method may also employ 2 elements that counter-oscillate along the same linear path, thus creating a zero velocity plane within a sample that is inserted between those two elements.

An essential element of the present invention is the use of an imaging technique which allows the user to obtain an image that is a thin optical section from within the sample that is subjected to deformation. Examples of such techniques are confocal laser scanning microscopy and magnetic resonance imaging. In contrast to these techniques that produce a thin optical slice, for instance, light microscopy effectively produces an image which is a projection resulting from the superposition of information obtained from the full sample thickness.

The combination of such a special imaging device and the specific arrangement of the counter-rotating or counter-oscillating elements is essential for realising the benefits of the present invention.

### DETAILED DESCRIPTION OF THE INVENTION

Hence, one aspect of the present invention relates to a method for analysing the behaviour of the microstructure of a material under the influence of deformation, which method comprises:
a) introducing a sample of the material to be analysed between, and in contact with, 2 elements;
b) applying deformation to the sample by counter-rotating the 2 elements around the same axis, or by counter-oscillating the 2 elements along the same linear path, whilst controlling the rotational speed or the oscillation amplitude so as to maintain a zero velocity plane within the sample;
c) matching the image plane of a non-invasive microstructure imaging device with the zero velocity plane in the sample, while applying the deformation; and
d) obtaining an image of the microstructure of the sample from the imaging device, showing the effect of the deformation on a part of the sample which coincides with the zero velocity plane in said sample.

As mentioned herein before, it is an essential element of the present method to employ an imaging device which is capable of generating a true image of a thin section of the sample's internal microstructure. In principle any such imaging device known in the art is suitable for use in the present method. Particularly preferred are microstructure imaging devices selected from the group consisting of confocal scanning laser microscope, magnetic resonance imaging device, acoustic microscope, echo imaging device and X-ray imaging device.

An important advantage of the aforementioned techniques resides in the fact that the emitting source that is needed to generate the signals that make up the image, can suitably be located at the same side of the sample as the imaging device itself. Thus, unlike light microscopy, the emitted photons, magnetic field, radiation, or sound does not have to penetrate the full sample thickness to produce a useful image. Hence in a preferred embodiment of the present invention the emitter is located at the same side of the sample as the imaging device.

Since in the present method the zero velocity plane and the image plane largely coincide, it is relatively easy to (re-)focus the imaging device, during applied deformation, on objects that are positioned within the zero velocity plane. While the imaging device is out of focus, objects within the image will tend to move in a particular direction, the speed of movement being faster the larger the mismatch between image plane and zero velocity plane. Thus it is relatively easy to manually match image and zero velocity plane, particularly at low rotation and oscillation frequencies. However it was found to be particularly advantageous to automatically match the image plane to the zero velocity plane, on the basis of output generated by the imaging device.

The present method can suitably be used to observe a particular selected microstrucural element whilst it is being subjected to deformation. The analysis will start with inserting a sample, followed by counter-rotating or counter-oscillating the 2 elements at a predefined rate or frequency. Subsequently, the imaging device is focussed on the zero velocity plane within the sample, i.e. the image plane is matched to the zero velocity plane. Once a suitable microstructural object has been identified, said object must remain within the zero velocity plane throughout the analysis. In theory, perfectly symmetrical objects will remain within the zero velocity plane because all forces exerted on such objects are in balance. In practice, however, objects show a tendency to (slowly) move out of the zero velocity plane. The inventors have found a feasible way to automatically adjust the zero velocity plane to make it coincide with the selected microstructural object and to also automatically adjust the image plane to coincide with the adjusted zero velocity plane.

Thus, in a preferred embodiment of the method of the invention, the zero velocity plane is automatically adjusted to coincide with a predefined microstructural object which is discernible in the image obtained from step d), following displacement of said microstructural object from the zero velocity plane, by altering the speed of rotation or the oscillation amplitude of both elements, on the basis of the dynamic changes in the microstructure which have been registered by said imaging device. Automatic adjustment not only offers the advantage of convenience, but also enables the present method to be carried out at high shear rates.

It is an essential aspect of the present method that the microstructural behaviour is analysed under conditions of constant deformation forces. Consequently, if during the measurement the zero velocity plane is displaced, this is done by changing the rotational speed or oscillating amplitude of both elements in such a way that the differential speed remains constant. This means that if the rotational speed of the first element is reduced, the rotational speed of the second element has to be increased by such an amount that the differential speed between the two elements in terms of rotations per second, remains constant. Similarly, if the oscillation amplitude of the first element is reduced, the oscillation amplitude of the second element must be increased by such an amount that the (maximum) differential speed between the 2 elements in m/s remains constant.

It was found that the automatic adjustment described above may effectively be achieved by using only 2 input parameters, which are either directly generated by, or derivable from the images generated by the imaging device. These input parameters are:
a) the observed direction of movement of the microstructural object within the image plane, and
b) the observed change in cross-sectional surface area of the microstructural object.

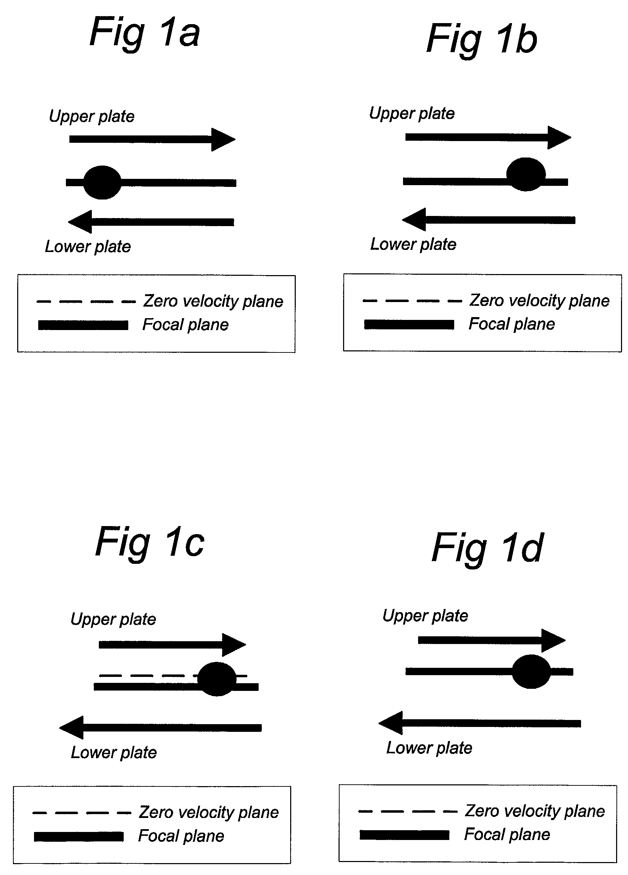

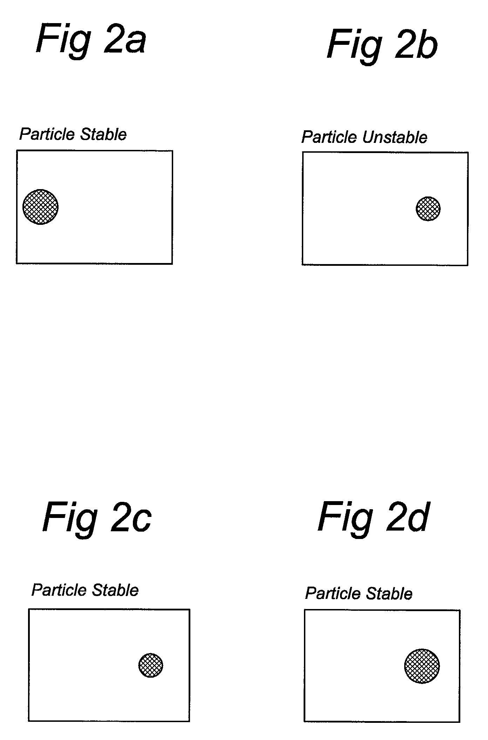

In Figure 1 it is illustrated that the direction of movement of a microstructural object within the image plane is indicative of the direction of displacement of the object relative to (i.e. perpendicular to) the zero velocity plane. Figure 2 illustrates that the (change in) cross-sectional surface area of the microstructural object provides information about the distance of movement.

The sequence of figures 1a to 1d shows how an object due to its irregularity or turbulence, may move out of the zero velocity plane (1b). By simultaneously changing the speeds of the upper element and the lower element at a constant differential speed, the zero velocity plane is moved to the new position of the object (1c). At the same time the image plane is adjusted to coincide with the new zero velocity plane (1d).

The sequence of figures 2a to 2d corresponds with the figures 1a to 1d and shows the images of the object as obtained from the imaging device. In figure 2a the object is stable, i.e. no movement is observed. In figure 2b the object is moving to the right, meaning that it is also moving up (due to movement of the upper plate). Consequently, as shown, the surface area of the object decreases as the object is leaving the image plane. In figure 2c the movement of the particle has been stopped by changing the rotational speed of the elements as described in relation to figure 1c. In figure 2d the object is stable again, i.e. it no longer moves. The surface area of the object shown in figure 2d is stable and similar to the surface area of the same object in figure 2a because of the coincidence of the new image and new zero velocity planes (figure 1d).

When, for a given microstructural object, input parameter a) or b) changes significantly, this means that said object is moving out of the zero velocity plane. Parameter a) indicates in which direction, perpendicular to the image plane, the object has moved. Parameter b) is indicative of the distance of movement perpendicular to the image plane. Thus it is possible to compute the extent to which the speed of rotation or the oscillation amplitude have to be changed in order to move the zero velocity plane to the position of the microstructural object and also how far the image plane needs to be adjusted to coincide again with the zero velocity plan. Naturally this procedure can be repeated continuously, i.e., between every pair of consecutive images, so as to minimise movement of the microstructural objects.

As mentioned herein before, the present method may suitably employ 2 counter-rotating elements in the form of 2 disks, or in the form of a disk and a cone. The combination of a disk, onto which the sample can settle under the influence of gravity, and a cone, which is mounted above said disk, is found to be very advantageous. The use of a cone makes it possible to maintain a uniform shear strain throughout the sample during the measurement. Good results can be obtained if the cone has a cone angle between 0.3 and 8°, which corresponds to a cone apex of between 179.7 and 172°, respectively.

In case a cone-disk combination is used, the evolving zero velocity plane will make an angle α with the disk, which angle α is dependent on the cone angle and the rotational speeds of the disk and the cone. In order to minimise the angle α it is preferred to rotate the cone at a significantly higher speed than the disk. Thus the resulting angle α will be substantially smaller than the cone angle, making it is easier to match the image plane and the zero velocity plane. Preferably, the combination of cone angle and rotational speeds is chosen in such a way that, during the measurement, the angle α is less than 3°, more preferably less than 2°, most preferably less than 1°.

The present method is particularly suitable for studying microstructural objects that have a discontinuous nature. Consequently, in a preferred embodiment the present method is used to image microstructural objects which are dispersed particles, droplets or bubbles, preferably with a mean diameter in the range of 0.1-100 µm.

In the present method it is essential to achieve a large overlap between the zero velocity and the image plane. This is best achieved by mounting the imaging device behind one of the rotating or oscillating elements. Thus, during steps c) and d) of the present method, preferably one of the elements is positioned between the sample and the imaging device.

The present method offers the advantage, particularly when it has been fully automated as described herein before, that high shear rates may be applied. Naturally it is also possible to apply low shear rates. In practice, with the present method, the deformation applied during the imaging of the micro structure can suitably be in the range of between 0.001 and 100 s⁻¹.

Another aspect of the present invention relates to a device, as depicted in figure 3, for analysing the behaviour of the microstructure of a material under the influence of rotational deformation, comprising:
a. a frame means [1],
b. a first element [2] mounted on the frame means for rotation with respect to the frame means, said first element defining an axis, preferably extending vertically, about which said element is rotationally movable,
c. a second element [3] mounted on the frame means for rotation with respect to the frame means, said second element being rotationally movable around said same axis and being positioned adjacent to the first element to define a space between the first and second element in which a sample of a material may be inserted for analysis,
d. first rotational drive means [4] to rotate the first element,
e. second rotational drive means [5] to rotate the second element in the opposite direction of the first element,
f. a microstructure imaging device [6] for providing an image of the microstructure, which microstructure imaging device is set up in such a way that its image plane can be adjusted to within the space between the first and second element,
g. first controlling means [7] for adjusting the rotational speed of the first and second rotational drive means and second controlling means [8] for adjusting the position of the image plane within the space between the first and second element in response to output generated by the microstructure imaging device.

Yet another aspect of the invention relates to a device for analysing the behaviour of the microstructure of a material under the influence of linear deformation, comprising:
a. a frame means [1],
b. a first element [2] mounted on the frame means for bi-directional linear movement with respect to the frame means, said first element defining an axis along which said first element is bi-directionally movable
c. a second element [3] mounted on the frame means for bi-directional linear movement with respect to the frame means, said second element being bi-directionally movable along said same axis and said second element being positioned adjacent to the first element to define a space between the first and second element in which a sample of a material may be inserted for analysis,
d. first drive means [4] to oscillate the first element,
e. second drive means [5] to oscillate the second element out of phase with the first element,
f. a microstructure imaging device [6] for providing an image of the microstructure, which microstructure imaging device is set up in such a way that its image plane can be adjusted to within the space between the first and second element,
g. first controlling means [7] for adjusting the oscillation amplitude of the first and second drive means and second controlling means [8] for adjusting the position of the image plane within the space between the first and second element in response to output generated by the microstructure imaging device,

The present device may suitable comprise processing means [9] which processes the output generated by the imaging device [6] and generates an output signal that is fed to the first and or second controlling means. Said interface [9] may suitably consist of a computing device, such as a microprocessor, processor array or a microcontroller. Preferably the processing means [9] are connected to the first and second controlling means and the microstructure imaging device, the processing means being arranged for adjusting the speed of rotation or the oscillation amplitude of both elements, on the basis of the dynamic changes in the microstructure which have been registered by the imaging device.

As mentioned herein before, the first controlling means are preferably set up and/or arranged in such a manner that the rotational speeds and oscillation amplitudes of the elements are automatically adjusted in such a way that the differential speed does not change as a result of the adjustment, i.e., meaning that the rotational speeds of both elements, or the oscillations speeds of both elements, are changed simultaneously. In a preferred embodiment the present device comprises a first rotational element in the form of a disk and a second rotational element in the form of a cone that is mounted above the disk. Preferably said cone has a cone angle of between 0.3 and 8°. The plate may advantageously be constructed of a translucent material such as glass.

The microstructure imaging device in the present device is preferably selected from the group consisting of confocal scanning laser microscope, magnetic resonance imaging device, acoustic microscope, echo imaging device and X-ray imaging device. Most preferably the microstructure imaging device is a confocal scanning laser microscope. As described herein before the aforementioned imaging devices make use of an emitting source that is needed to generate the signals that make up the image. Preferably said emitter is located at the same side, relative to the space defined between the first and second element, as the imaging device. Even more preferably both the emitter and the microstructure imaging device are located behind one of the elements relative to the space defined between the first and second element. In case one of said elements is a cone and the other a disk, the emitter and microstructure imaging device are suitably located behind the disk relative to the space defined between the cone and the disk. In another preferred embodiment, the first and/or the second element are made of a material which is transparent to the microstructure imaging device.

## Claims

1. Method for analysing the behaviour of the microstructure of a material under the influence of deformation, which method comprises:
a) introducing a sample of the material to be analysed between, and in contact with, 2 elements;
b) applying deformation to the sample by counter-rotating the 2 elements around the same axis, or by counter-oscillating the 2 elements along the same linear path, whilst controlling the rotational speed or the oscillation amplitude so as to maintain a zero velocity plane within the sample;
c) matching the image plane of a non-invasive microstructure imaging device with the zero velocity plane in the sample, while applying the deformation; and
d) obtaining an image of the microstructure of the sample from the imaging device, showing the effect of the deformation on a part of the sample which coincides with the zero velocity plane in said sample.

2. Method according to claim 1, wherein the microstructure imaging device is selected from the group consisting of confocal scanning laser microscope, magnetic resonance imaging device, acoustic microscope, echo imaging device and X-ray imaging device.

3. Method according to claim 1 or 2, wherein the zero velocity plane is automatically adjusted to coincide with a predefined microstructural object which is discernible in the image obtained from step d), following displacement of said microstructural object from the zero velocity plane, by altering the speed of rotation or the oscillation amplitude of both elements, on the basis of the dynamic changes in the microstructure which have been registered by said imaging device.

4. Method according to claim 3, wherein the dynamic changes are selected from the observed direction of movement of the microstructural object within the image plane, and the observed change in cross-sectional surface area of the microstructural object within the image plane.

5. Method according to claim 4, wherein the microstructural objects are dispersed particles, droplets or bubbles, preferably with a mean diameter in the range of 0.1-100 µm.

6. Method according to any one of claims 1-5, wherein during steps c) and d) one of the elements is positioned between the sample and the imaging device.

7. Method according to any of claims 1-6, wherein the deformation applied during the imaging of the microstructure is in the range of 0.001 and 100 s⁻¹.

8. A device for analysing the behaviour of the microstructure of a material under the influence of rotational deformation, comprising:
a. a frame means [1],
b. a first element [2] mounted on the frame means for rotation with respect to the frame means, said first element defining an axis about which said element is rotationally movable,
c. a second element [3] mounted on the frame means for rotation with respect to the frame means, said second element being rotationally movable around said same axis and being positioned adjacent to the first element to define a space between the first and second element in which a sample of a material may be inserted for analysis,
d. first rotational drive means [4] to rotate the first element,
e. second rotational drive means [5] to rotate the second element in the opposite direction of the first element,
f. a microstructure imaging device [6] for providing an image of the microstructure, which microstructure imaging device is set up in such a way that its image plane can be adjusted to within the space between the first and second element,
g. first controlling means [7] for adjusting the rotational speed of the rotational drive means and second controlling means [8] for adjusting the position of the image plane within the space between the first and second element in response to output generated by the microstructure imaging device.

9. A device for analysing the behaviour of the microstructure of a material under the influence of linear deformation, comprising:
a. a frame means [1],
b. a first element [2] mounted on the frame means for bi-directional linear movement with respect to the frame means, said first element defining an axis along which said first element is bi-directionally movable
c. a second element [3] mounted on the frame means for bi-directional linear movement with respect to the frame means, said second element being bi-directionally movable along said same axis and said second element being positioned adjacent to the first element to define a space between the first and second element in which a sample of a material may be inserted for analysis,
d. first drive means [4] to oscillate the first element,
e. second drive means [5] to oscillate the second element out of phase with the first element,
f. a microstructure imaging device [6] for providing an image of the microstructure; which microstructure imaging device is set up in such a way that its image plane can be adjusted to within the space between the first and second element,
g. first controlling means [7] for adjusting the oscillation amplitude of the drive means and second controlling means [8] for adjusting the position of the image plane within the space between the first and second element in response to output generated by the microstructure imaging device.

10. The device according to any one of claims 8 or 9, wherein the microstructure imaging device is selected from the group consisting of confocal scanning laser microscopy, magnetic resonance imaging device, acoustic microscope, echo imaging device and X-ray imaging device.

11. The device according to any one of the claims 8-10, wherein the device further comprises processing means [9] connected to the first and second controlling means and the microstructure imaging device, the processing means being arranged for adjusting the speed of rotation or the oscillation amplitude of both elements, on the basis of the dynamic changes in the microstructure which have been registered by the imaging device.
